# EUROPEAN PATENT SPECIFICATION

(11) **EP 3 206 431 B1**
(45) Date of publication and mention of the grant of the patent: **19.02.2020**
(21) Application number: 15848521.9
(22) Date of filing: 15.07.2015
(51) Int. Cl.: H04W 36/00, H04W 92/18

(54) **WIRELESS TERMINAL, CONTROL DEVICE, AND METHODS FOR BOTH**
DRAHTLOSES ENDGERÄT, STEUERUNGSVORRICHTUNG UND VERFAHREN FÜR BEIDE
TERMINAL SANS FIL, DISPOSITIF DE COMMANDE, ET LEURS PROCÉDÉS

(30) Priority: 07.10.2014 JP 2014206188
(43) Date of publication of application: 16.08.2017
(73) Proprietor: NEC Corporation, Tokyo 108-8001 (JP)
(72) Inventor: AMINAKA, Hiroaki, Tokyo 108-8001 (JP)
(74) Representative: MacDougall, Alan John Shaw
(86) International application number: PCT/JP2015/003571
(87) International publication number: WO 2016/056153

(56) References cited:
- WO-A1-2014/014326
- WO-A1-2014/084028
- WO-A1-2014/124689
- WO-A1-2014/157868
- LG ELECTRONICS INC: "D2D operation upon mobility", 3GPP DRAFT; R2-143736 [D2D-C] D2D OPERATION UPON MOBILITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Dresden, Germany; 20140818 - 20140822 17 August 2014 (2014-08-17), XP050794686, Retrieved from the Internet: URL:http://www.3gpp.org/ftp/Meetings_3GPP_ SYNC/RAN2/Docs/ [retrieved on 2014-08-17]
- ERICSSON: "Signaling ProSe UE Authorization", 3GPP DRAFT; R3-141317, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Seoul, South Korea; 20140519 - 20140523 18 May 2014 (2014-05-18), XP050795863, Retrieved from the Internet: URL:http://www.3gpp.org/ftp/Meetings_3GPP_ SYNC/RAN3/Docs/ [retrieved on 2014-05-18]
- "3rd Generation Partnership Project; Technical Specification Group Core Network and Terminals; Proximity-services (ProSe) User Equipment (UE) to ProSe function protocol aspects; Stage 3 (Release 12)", 3GPP STANDARD; 3GPP TS 24.334, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. V12.0.0, 26 September 2014 (2014-09-26), pages 1-61, XP050925976, [retrieved on 2014-09-26]
- ERICSSON: "Mobility for D2D UEs", 3GPP DRAFT; R3-132277, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. San Francisco, USA; 20131111 - 20131115 13 November 2013 (2013-11-13), XP050738418, Retrieved from the Internet: URL:http://www.3gpp.org/ftp/Meetings_3GPP_ SYNC/RAN/RAN3/Docs/ [retrieved on 2013-11-13]

## Description

### Technical Field

The present application relates to Proximity Service (ProSe) communication performed by radio terminals, and more particularly to a handover of a radio terminal that is performing inter-terminal direct communication.

### Background Art

3GPP Release 12 specifies Proximity-based services (ProSe) (see, for example, Non-patent Literature 1 and 2). The ProSe includes ProSe discovery and ProSe direct communication. The ProSe discovery identifies that radio terminals capable of performing ProSe direct communication (i.e., ProSe-enabled UEs) are in proximity of each other. In an example, the ProSe discovery can be performed through a procedure in which a ProSe-enabled UE detects another ProSe-enabled UE by using only capability of a radio communication technology (e.g., Evolved Universal Terrestrial Radio Access (E-UTRA) technology) possessed by these two UEs. In another example, the ProSe discovery can be performed by a radio access network (E-UTRA Network (E-UTRAN)) or a core network (Evolved Packet Core (EPC)).

The ProSe direct communication enables establishment of communication paths between two or more ProSe-enabled UEs that are in direct communication range after the ProSe discovery procedure is performed. In other words, the ProSe direct communication enables a ProSe-enabled UE to communicate with another ProSe-enabled UE directly without communicating through a base station (eNodeB). The ProSe direct communication may be performed by using a radio communication technology that is also used to access a base station (eNodeB) (i.e., E-UTRA technology) or by using a wireless local area network (WLAN) radio technology (i.e., IEEE 802.11 radio technology).

In 3GPP Release 12, a ProSe function in a core network (EPC) assists the ProSe discovery and the ProSe direct communication. The ProSe function is a logical function that is used for network-related operations required for the ProSe. The ProSe function provides functionality including, for example, (a) communication with third-party applications (ProSe Application Server), (b) authentication of UEs for ProSe discovery and ProSe direct communication, (c) transmission of configuration information (e.g., designation of radio resources and transmission power) for ProSe discovery and ProSe direct communication to UEs, and (d) provision of EPC-level ProSe discovery. The ProSe function may be implemented in one or more network nodes or entities. In this specification, one or more network nodes or entities that implement the ProSe function are referred to as a "ProSe function entity" or a "ProSe function server".

The ProSe direct communication in 3GPP Release 12 is one example of the inter-terminal direct communication. Similarly to the ProSe in 3GPP Release 12, D2D communication in a mobile communication network includes the discovery phase and direct communication phase that are assisted by a function or a node (e.g., ProSe function) in the network. The inter-terminal direct communication is performed between two or more radio terminals in proximity of each other without communicating through any network node (e.g., a base station). The inter-terminal direct communication is also referred to as "device-to-device (D2D) communication" or "peer-to-peer communication". The ProSe direct communication is an example of the inter-terminal direct communication and is also referred to as "ProSe communication".

Patent Literature 1 discloses that in a handover procedure for handing over two radio terminals performing inter-terminal direct communication from a source base station to a target base station, the source base station sends to these two radio terminals a handover command indicating that the inter-terminal direct communication can be performed in the target base station (or indicating radio resources allocated for the inter-terminal direct communication by the target base station). Patent Literature 1 further discloses that when the target base station does not support inter-terminal direct communication, the source base station instructs these two radio terminals to stop the inter-terminal direct communication and then sends to these two radio terminals a handover command for handover to the target base station.

Patent Literature 2 discloses that a radio terminal communicates with a base station or another network entity (e.g., a network controller) in a wide area network (WAN) in order to start or maintain peer-to-peer communication (i.e., inter-terminal direct communication) with other radio terminals on an unlicensed frequency that is not licensed to the WAN. More specifically, Patent Literature 2 discloses that a radio terminal (a) receives a list of unlicensed frequencies from a base station or another network entity in the WAN, (b) starts inter-terminal direct communication with another radio terminal(s) on a first frequency included in this list, (c) detects degradation of communication quality on the first frequency or detects a user licensed to use the first frequency, and (d) performs an inter-frequency handover from the first frequency to a second frequency included in the list. Note that the term "inter-frequency handover" used in Patent Literature 2 means that a radio terminal changes a frequency for inter-terminal direct communication while still being under one base station.

Patent Literature 3 discloses a method of managing a communication connection and a corresponding apparatus. The method comprises: transmitting a first message for requesting a RRC connection, wherein the first message includes information indicating a cause of the request; establishing the communication connection via a network path; and receiving a second message from a ProSe server if the cause of the request is related with a ProSe, wherein the second message indicates whether the communication connection is out of proximity range or not, wherein, if the second message indicates that the communication connection is out of the proximity range, a third message for requesting one of a proximity range extension and a communication connection release is transmitted to the ProSe server.

Non-patent Literature 3 discusses some details on D2D operation upon mobility / handover in connected mode.

Non-patent Literature 4 is concerned with signaling in Rel-12 for ProSe UE authorization, to support ProSe UEs in connected mode, especially the case of inter-MME S1 handover.

### Citation List

### Patent Literature

Patent Literature 1: International Patent Publication No. WO2014/084028
Patent Literature 2: International Patent Publication No. WO2011/116017
Patent Literature 3: International Patent Publication No. WO 2014/157868 A1

### Non Patent Literature

Non-patent Literature 1: 3GPP TS 22.278 V12.4.0 (2013-09), "3rd Generation Partnership Project; Technical Specification Group Services and System Aspects; Service requirements for the Evolved Packet System (EPS) (Release 12)", September 2013
Non-patent Literature 2: 3GPP TS 23.303 V12.1.0 (2014-06), "3rd Generation Partnership Project; Technical Specification Group Services and System Aspects; Proximity-based services (ProSe); Stage 2 (Release 12)", June 2014
Non-patent Literature 3: 3GPP Tdoc R2-143736, "D2D operation upon mobility", LG Electronics Inc., 3GPP TSG-RAN WG2 #87, Dresden, Germany, Aug 2014
Non-patent Literature 4: 3GPP Tdoc R3-141317, "Signaling ProSe UE Authorization", Ericsson, 3GPP TSG-RAN WG3 #84, Seoul, South Korea, May 2014

### Technical Problem

Patent Literature 1 discloses that in an inter-base station handover of a radio terminal that is performing inter-terminal direct communication, the radio terminal communicates with a base station and the base station sends, to the radio terminal, information about inter-terminal direct communication after the handover. However, Patent Literature 1 does not disclose that the radio terminal communicates with a controlling entity for the inter-terminal direct communication located in a core network or an external network, such as a ProSe function entity. Further, Patent Literature 2 merely discloses that a radio terminal changes a frequency for inter-terminal direct communication while still being under one base station, but does not provide any disclosure regarding an inter-base station handover. That is, Patent Literature 1 and 2 fail to disclose that a controlling entity for inter-terminal direct communication such as a ProSe function entity communicates, through a radio access network and a core network, with a radio terminal performing the inter-terminal direct communication in order to assist an inter-base station handover of this radio terminal.

The inventor has found several problems regarding an inter-base station handover of a radio terminal that performs inter-terminal direct communication. For example, when a radio terminal performing inter-terminal direct communication performs an inter-base station handover, the handover process might be delayed due to occurrences of extra signaling to maintain, modify (e.g., change a radio resource), or stop the inter-terminal direct communication. Further, in general, an inter-base station handover is performed within a radio access network, or in a radio access network and a core network, and accordingly a controlling entity for inter-terminal direct communication such as a ProSe function entity does not take part in the inter-base station handover. Therefore, for example, when a radio terminal performing inter-terminal direct communication performs an inter-base station handover, a controlling entity for the inter-terminal direct communication such as a ProSe function entity might not be able to recognize a change in the state of the inter-terminal direct communication caused by the inter-base station handover. In other words, the inter-base station handover of the radio terminal performing inter-terminal direct communication might cause a mismatch between the configuration information regarding the inter-terminal direct communication held by the inter-terminal direct communication controlling entity and the configuration regarding the inter-terminal direct communication in the radio terminal.

One of the objects to be attained by embodiments disclosed herein is to provide an apparatus, a method, and a program that contribute to improvement for solving at least one of the above-described problems on an inter-base station handover of a radio terminal that is performing inter-terminal direct communication. It should be noted that this object is merely one of the objects to be attained by the embodiments disclosed herein. The other objects or problems and novel features will be made apparent from the following description and the accompanying drawings.

### Summary of Invention

The invention is defined in the claims.
In a first aspect according to claim 13, a method performed by a first radio terminal includes: (a) communicating with a controlling entity through a first cell managed by a first radio access network entity located in a radio access network and through a core network connected to the radio access network, in order to establish Proximity Service (ProSe) direct communication with a second radio terminal, the ProSe direct communication being performed without communicating through the radio access network, the controlling entity being located in the core network; (b) starting the ProSe direct communication with the second radio terminal in the first cell without communicating through the radio access network; and (c) transmitting, to the controlling entity located in the core network, first control information about a handover of the first and second radio terminals from the first cell to a second cell managed by a second radio access network entity located in the radio access network.
In a second aspect according to claim 14, a method, performed by a controlling entity located in a core network, includes: (a) communicating with a first radio terminal through a first cell managed by a first radio access network entity located in a radio access network and through the core network connected to the radio access network, in order to establish Proximity Service (ProSe) direct communication between the first radio terminal and a second radio terminal, the ProSe direct communication being performed without communicating through the radio access network; and (b) receiving, from at least one of the first and second radio terminals, first control information about a handover of the first and second radio terminals from the first cell to a second cell managed by a second radio access network entity located in the radio access network.
In a third aspect according to claim 1, a first radio terminal includes a memory and a processor coupled to the memory. The processor is adapted to: (a) communicate with a controlling entity through a first cell managed by a first radio access network entity located in a radio access network and through a core network connected to the radio access network, in order to establish Proximity Service (ProSe) direct communication with a second radio terminal, the ProSe direct communication being performed without communicating through the radio access network, the controlling entity being located in the core network; (b) start the ProSe direct communication with the second radio terminal in the first cell without communicating through the radio access network; and (c) transmit, to the controlling entity located in the core network, first control information about a handover of the first and second radio terminals from the first cell to a second cell managed by a second radio access network entity located in the radio access network.
In a fourth aspect according to claim 10, a controlling entity that is located in a core network includes a memory and a processor coupled to the memory. The processor is adapted to: (a) communicate with a first radio terminal through a first cell managed by a first radio access network entity located in a radio access network and through the core network connected to the radio access network, to establish Proximity Service (ProSe) direct communication between the first radio terminal and a second radio terminal, the ProSe direct communication being performed without communicating through the radio access network; and (b) receive, from at least one of the first and second radio terminals, first control information about a handover of the first and second radio terminals from the first cell to a second cell managed by a second radio access network entity located in the radio access network.
In a fifth aspect according to claim 15, a computer-readable medium comprising instructions which, when executed by a computer-programmable device, cause the computer-programmable device to perform the method according to the above-described first or second aspect.

### Advantageous Effects of Invention

According to the above-described aspects, it is possible to provide an apparatus, a method, and a program that contribute to improvement for solving at least one of the above-described several problems on an inter-base station handover of a radio terminal that is performing inter-terminal direct communication.

### Brief Description of Drawings

Fig. 1 shows a configuration example of a radio communication system according to some embodiments;
Fig. 2 shows a configuration example of a radio communication system according to some embodiments;
Fig. 3 is a flowchart showing an operation example of a radio terminal that is performed when radio terminals performing ProSe communication are handed over between base stations according to a first embodiment;
Fig. 4 is a flowchart showing an operation example of a ProSe function entity that is performed when radio terminals performing ProSe communication are handed over between base stations according to the first embodiment;
Fig. 5 is a sequence diagram showing an example of processes that are performed when radio terminals performing ProSe communication are handed over between base stations according to a second embodiment;
Fig. 6 is a sequence diagram showing an example of processes that are performed when radio terminals performing ProSe communication are handed over between base stations according to a third embodiment;
Fig. 7 is a sequence diagram showing an example of processes that are performed when radio terminals performing ProSe communication are handed over between base stations according to a fourth embodiment;
Fig. 8 is a sequence diagram showing an example of processes that are performed when radio terminals performing ProSe communication are handed over between base stations according to a fifth embodiment;
Fig. 9 is a sequence diagram showing an example of processes that are performed when radio terminals performing ProSe communication are handed over between base stations according to a sixth embodiment;
Fig. 10 is Block diagram showing a configuration example of a radio terminal; and
Fig. 11 is Block diagram showing a configuration example of a ProSe function entity.

### Description of Embodiments

Specific embodiments are explained hereinafter in detail with reference to the drawings. The same or corresponding elements are denoted by the same symbols throughout the drawings, and duplicated explanations are omitted as necessary for the sake of clarity.

Embodiments described below will be explained mainly using specific examples with regard to an Evolved Packet System (EPS). However, these embodiments are not limited to being applied to the EPS and may also be applied to other mobile communication networks or systems such as a 3GPP Universal Mobile Telecommunications System (UMTS), a 3GPP2 CDMA2000 system (1xRTT, HRPD (High Rate Packet Data)), a Global System for Mobile communications (GSM (Registered Trademark))/ General packet radio service (GPRS) system, and a WiMAX system.

### First Embodiment

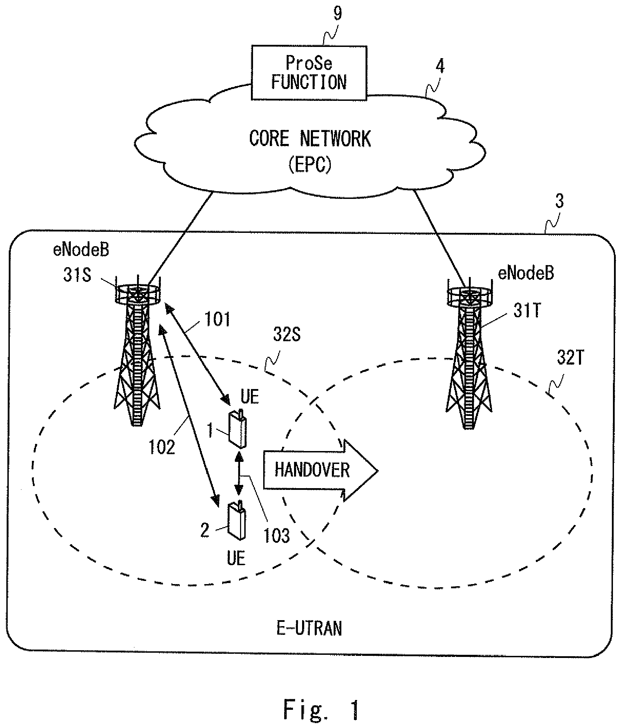

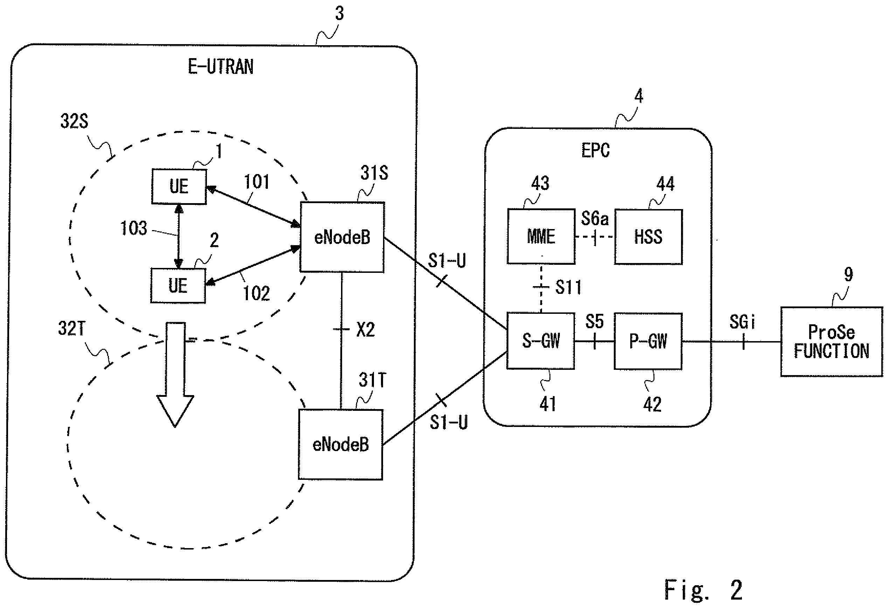

Figs. 1 and 2 show a configuration example of a radio communication system according to this embodiment. Both a UE 1 and a UE 2 are radio terminals capable of performing ProSe (i.e., ProSe-enabled UEs), and they can establish a ProSe communication path 103 and perform ProSe direct communication (or ProSe communication, inter-terminal direct communication, or D2D communication) between them. The ProSe direct communication between the UEs 1 and 2 may be performed by using a radio communication technology that is also used to access a base station (eNodeB) (i.e., E-UTRA technology) or by using a WLAN radio technology (IEEE 802.11 radio technology).

Both an eNodeB 31S and an eNodeB 31T are entities located in a radio access network (i.e., E-UTRAN) 3, manage cells 32S and 32T, and are able to perform communication (101 and 102) with the UE 1 and the UE 2 on frequencies licensed to the E-UTRAN 3 by using the E-UTRA technology. Note that in this embodiment, an inter-cell handover (inter-base station handover) of the UEs 1 and 2 from the cell 32S managed by the eNodeB 31S to the cell 32T managed by the eNodeB 31T is explained. Accordingly, the eNodeBs 31S and 31T are referred to as a "source eNodeB" and a "target eNodeB", respectively, and the cells 32S and 32T are referred to as a "source cell" and a "target cell", respectively.

A core network (i.e., EPC) 4 includes a plurality of user-plane entities (e.g., a Serving Gateway (S-GW) 41 and a Packet Data Network Gateway (P-GW) shown in Fig. 2) and a plurality of control-plane entities (e.g., a Mobility Management Entity (MME) 43 and a Home Subscriber Server (HSS) 44 shown in Fig. 2). The user-plane entities relay user data of the UEs 1 and 2 between the E-UTRAN 3 and an external network (Packet Data Network (PDN)). The control-plane entities perform various types of control for the UEs 1 and 2 including mobility management, session management (bearer management), and billing management.

In order to start ProSe direct communication (103) in the source cell 32S, each of the UE 1 and the UE 2 attaches to the core network (i.e., EPC) 4 through the source eNodeB 31T, establishes a Packet Data Network (PDN) connection for communicating with a ProSe function entity 9, and transmits and receives ProSe control signaling to and from the ProSe function entity 9 through the E-UTRAN 3 and the EPC 4. The UEs 1 and 2 may use a ProSe discovery service provided by the ProSe function entity 9. The UEs 1 and 2 may receive from the ProSe function entity 9 a message indicating permission for the UEs 1 and 2 to activate ProSe discovery or ProSe direct communication. The UEs 1 and 2 may receive, from the ProSe function entity 9, configuration information (e.g., designation of radio resources and transmission power) for ProSe discovery or ProSe direct communication in the source cell 32S. Note that an interface (PC3 reference point) between the ProSe function and each of the UEs 1 and 2 depends on the user plane of the E-UTRAN 3 and the EPC 4, and accordingly the ProSe control signaling is transferred on this user plane. Therefore, as shown in Fig. 2, the ProSe function entity 9 communicates with the EPC 4 (i.e., the P-GW 42) through the SGi reference point, which is a reference point between a PDN Gateway (P-GW) 42 and a PDN.

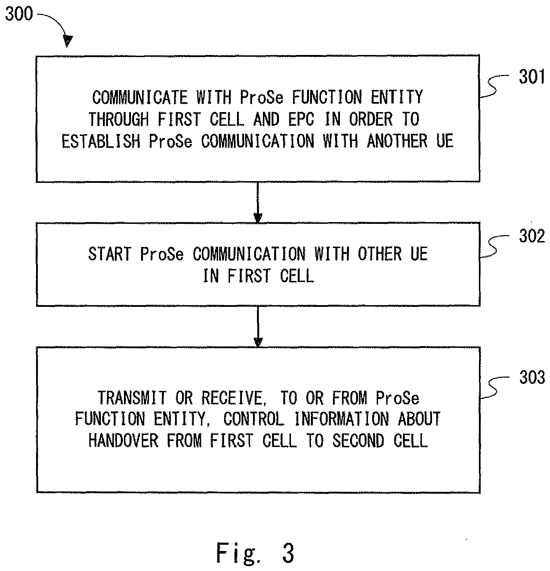

The following provides an example of processes that are performed by the UEs 1 and 2 and the ProSe function entity 9 in relation to a handover of the UEs 1 and 2 from the source cell 32S to the target cell 32T. Fig. 3 is a flowchart showing an example of processes (300) performed by the UE 1. Note that the processes 300 shown in Fig. 3 may be performed by the UE 2 or by both of the UEs 1 and 2. In Block 301, the UE 1 communicates with the ProSe function entity 9 through a first cell (source cell 32S) and also through the EPC 4 in order to establish ProSe communication with another UE (UE 2). In Block 302, the UE 1 starts ProSe communication with the other UE (UE 2) in the first cell (source cell 32S). In Block 303, the UE 1 transmits or receives, to or from the ProSe function entity 9, control information about a handover from the first cell (source cell 32S) to a second cell (target cell 32T).

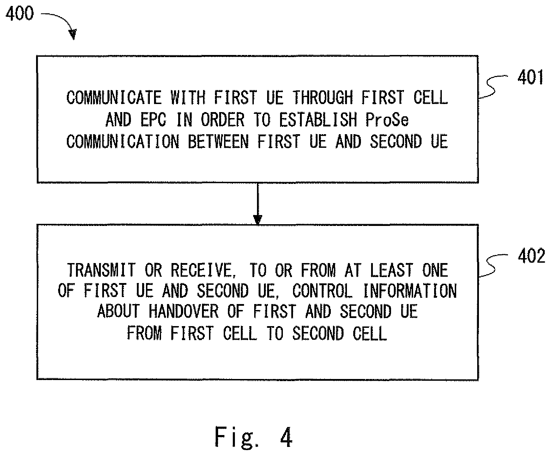

Fig. 4 is a flowchart showing an example of processes (400) performed by the ProSe function entity 9. In Block 401, the ProSe function entity 9 communicates with the first UE (UE 1) through the first cell (source cell 32S) and also through the EPC 4 in order to establish ProSe communication between the first and second UEs (UEs 1 and 2) in the first cell (source cell 32S). In Block 401, the ProSe function entity 9 may communicate with the UE 2 or may communicate with both of the UEs 1 and 2.

In Block 402, the ProSe function entity 9 transmits or receives, to or from at least one of the first and second UEs (UEs 1 and 2), control information about a handover of the first and second UEs (UEs 1 and 2) from the first cell (source cell 32S) to the second cell (target cell 32T). The control information about the handover transmitted from the ProSe function entity 9 to one of the first and second UEs (e.g., UE 1) may be forwarded to the other UE (e.g., UE 2) through the ProSe communication path 103. One of the first and second UEs (e.g., UE 1) may receive the control information about the handover from the other UE (e.g., UE 2) through the ProSe communication path 103 and transmit the received control information to the ProSe function entity 9.

Next, several examples of the content and transmission timing of the control information about the handover explained above with reference to Figs. 3 and 4 are explained. In a first example, the control information about the handover may be transmitted from the ProSe function entity 9 to at least one of the UEs 1 and 2. In this case, the control information may indicate whether ProSe communication after the handover in the target cell 32T is permitted, or may indicate whether a handover to the target cell 32T while maintaining ProSe communication (i.e., a handover to the target cell 32T without stopping ProSe communication) is permitted. Additionally or alternatively, the control information may include configuration information for ProSe communication to be performed in the target cell 32T after the handover. This configuration information for the ProSe communication may indicate radio resources that can be used for the ProSe communication in the target cell 32T.

In this first example, the ProSe function entity 9 may transmit the control information about the handover to at least one of the UEs 1 and 2 before initiation of the handover. For example, the ProSe function entity 9 may transmit the control information when the configuration for the ProSe communication in the source cell 32S is performed (i.e., in Block 301 in Fig. 3), or when the configuration for the ProSe communication in the source cell 32S is updated. The ProSe function entity 9 may transmit the control information about the handover to at least one of the UEs 1 and 2 in response to receiving from at least one of the UEs 1 and 2 a request for the control information about the handover. In this first example, it is possible to prepare, before the handover, for the ProSe communication in the target cell 32T to be performed after the handover, and hence to prevent a delay in the handover which would otherwise be caused when the preparation of the ProSe communication in the target cell 32T is performed during the execution of the handover procedure.

In a second example, the control information about the handover may be transmitted from at least one of the UEs 1 and 2 to the ProSe function entity 9 before initiation of the handover. In this case, the control information may include an indication indicating an advance notice of the handover. Additionally or alternatively, the control information may include an indication indicating the target cell 32T or the target eNodeB 31T. Additionally or alternatively, the control information may indicate a state of the ProSe communication in the source cell 32S (e.g., used radio resources, communication quality, or throughput). Additionally or alternatively, the control information may include configuration information for the ProSe communication to be performed in the target cell 32T after the handover (e.g., an indication of radio resources that can be used for the ProSe communication in the target cell 32T). Note that the UE 1, the UE 2, or both may transmit the control information about the handover in response to detecting a change in the state of ProSe communication in the source cell 32S. The change in the state of the ProSe communication relates, for example, to the distance between the UE 1 and the UE 2 or to communication quality (e.g., reception power) of the ProSe communication in the UE 1 or the UE 2. In this second example, it is possible to prepare, before the handover, for the ProSe communication in the target cell 32T to be performed after the handover, and hence to prevent a delay in the handover which would otherwise be caused when the preparation of the ProSe communication in the target cell 32T is performed during the execution of the handover procedure.

In a third example, the control information about the handover may be transmitted from at least one of the UEs 1 and 2 to the ProSe function entity 9 after initiation of the handover but before completion of the handover. In this case, the control information may include an indication indicating the initiation of the handover. Additionally or alternatively, the control information may include an indication indicating the target cell 32T or the target eNodeB 31T. Additionally or alternatively, the control information may indicate a state of the ProSe communication in the source cell 32S (e.g., used radio resources, communication quality, or throughput). Additionally or alternatively, the control information may include configuration information for the ProSe communication to be performed in the target cell 32T after the handover (e.g., an indication of radio resources that can be used for the ProSe communication in the target cell 32T). In this third example, the ProSe function entity 9 can manage changes in the state (or in the configuration) of the ProSe communication caused by the handover and it is hence possible to prevent an occurrence of a mismatch between the configuration information regarding the ProSe communication held by the ProSe function entity 9 and the configuration regarding the ProSe communication in the UEs 1 and 2.

In a fourth example, the control information about the handover may be transmitted from at least one of the UEs 1 and 2 to the ProSe function entity 9 after completion of the handover. In this case, the control information may include an indication indicating the completion of the handover. Additionally or alternatively, the control information may include an indication indicating the target cell 32T or the target eNodeB 31T. Additionally or alternatively, the control information may indicate a state of the ProSe communication in the target cell 32T (e.g., used radio resources, communication quality, or throughput). Additionally or alternatively, the control information may include configuration information for the ProSe communication performed after the handover in the target cell 32T (e.g., an indication of radio resources that can be used for the ProSe communication in the target cell 32T). In this fourth example, the ProSe function entity 9 can manage changes in the state (or in the configuration) of the ProSe communication caused by the handover and it is hence possible to prevent an occurrence of a mismatch between the configuration information regarding the ProSe communication held by the ProSe function entity 9 and the configuration regarding the ProSe communication in the UEs 1 and 2.

### Second Embodiment

This embodiment provides a specific example of the processes that are performed in relation to a handover of the UEs 1 and 2 from the source cell 32S to the target cell 32T explained in the first embodiment. Specifically, an example in which the ProSe function entity 9 transmits to at least one of the UEs 1 and 2, before initiation of the handover, control information about the handover is explained. A configuration example of a radio communication system according to this embodiment is similar to that shown in Figs. 1 and 2.

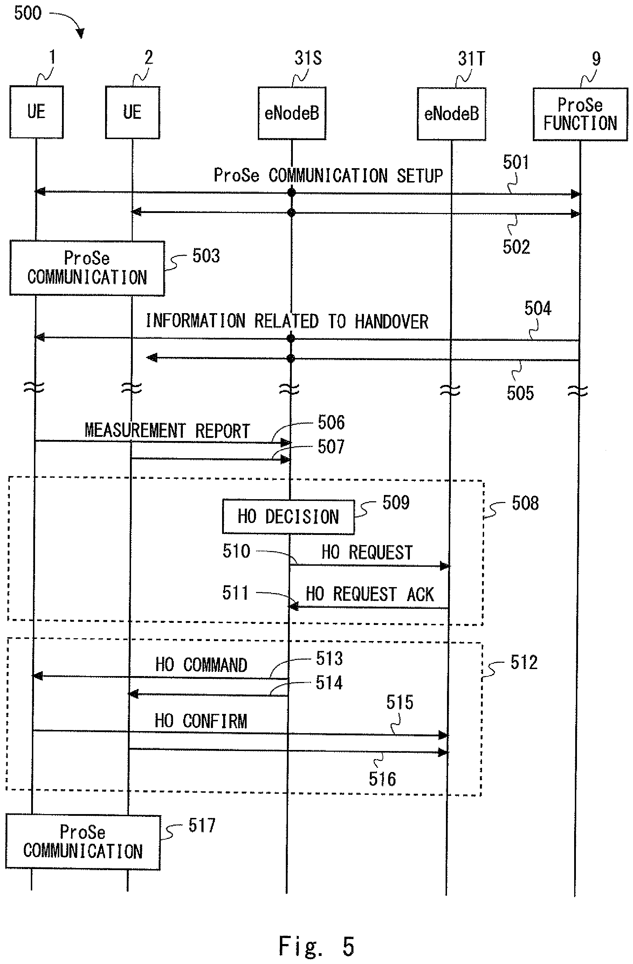

Fig. 5 is a sequence diagram showing processes 500 according to this embodiment. In Blocks 501 and 502, the UEs 1 and 2 communicate with the ProSe function entity 9 through the source eNodeB 31S and the EPC 4 to start ProSe communication. In Block 509, the UEs 1 and 2 perform the ProSe communication in the source cell 32S. In Blocks 504 and 505, the ProSe function entity 9 transmits, before the handover, the control information about the handover. This control information may include, for example, an indication indicating whether the ProSe communication in the target cell 32T is permitted, or an indication indicating whether the handover to the target cell 32T while maintaining the ProSe communication is permitted. Additionally or alternatively, this control information may include configuration information for the ProSe communication in the target cell 32T.

In Blocks 506 and 507, each of the UE 1 and the UE 2 transmits a measurement report (UE measurement report) to the source eNodeB 31S. These measurement reports can be used for the source eNodeB 31S to determine whether the handover should be initiated. The condition for transmitting the measurement reports is configured in the UEs 1 and 2 by the source eNodeB 31S. The condition for transmitting the measurement report in the E-UTRA is, for example, an Event A3 (Neighbor becomes offset better than serving).

Block 508 corresponds to a handover preparation phase and Block 512 corresponds to a handover execution phase. Note that, in this specification, a handover (or a handover procedure) includes a handover preparation phase (block 508) and a handover execution phase (block 512). Therefore, an expression "before a handover" in this specification means "before a handover preparation phase (block 508)".

In the handover preparation phase (block 508), the source eNodeB 31S determines the initiation of the handover of the UEs 1 and 2 based on the measurement reports (block 509). In Block 510, the source eNodeB 31S sends a handover request (Handover Request) message to the target eNodeB 31T through an X2 interface (X2 reference point). The handover request may include an indication indicating that the UEs 1 and 2 are performing ProSe communication, or include configuration information for the ProSe communication. Upon receiving the handover request, the target eNodeB 31T prepares resources for the UEs 1 and 2 (e.g., bearer resources for E-UTRA communication (101 and 102 in Figs. 1 and 2), Radio Resource Control (RRC) resources, and ProSe communication resources in the target cell 32T), and sends a handover acknowledgement message (Handover Request Ack) to the source eNodeB 31S (block 511). The handover acknowledgement message may indicate that the UEs 1 and 2 are permitted to perform the ProSe communication in the target cell 32T and indicate ProSe communication resources in the target cell 32T.

In the handover execution phase (block 512), the source eNodeB 31S sends handover command (Handover Command) messages to the UEs 1 and 2 (Blocks 513 and 514). The handover command messages may indicate radio resources for ProSe communication in the target cell 32T. Upon receiving the handover command messages, the UEs 1 and 2 synchronize with the target eNodeB 31T, access the target eNodeB 31T, and send a handover confirmation message (Handover Confirm) to the target eNodeB 31T (Blocks 515 and 516).

In Block 517, the UEs 1 and 2 start ProSe communication in the target cell 32T. The ProSe communication in Block 517 may be initiated when the control information about the handover received in Blocks 504 and 505 indicates the permission for the ProSe communication in the target cell. On the other hand, when the control information in Blocks 504 and 505 indicates that the ProSe communication in the target cell is not permitted or indicates that the handover to the target cell 32T while maintaining the ProSe communication is not permitted, the UEs 1 and 2 may stop the ProSe communication before or during the handover procedure (Blocks 508 and 512).

Although Fig. 5 shows an X2 handover based on direct X2 signaling between the eNodeB 31S and the eNodeB 31T, the handover of the UEs 1 and 2 may be an S1 handover based on S1-MME signaling between the EPC 4 (MME 43) and both of the eNodeBs 31S and 31T.

In this embodiment, it is possible to prepare, before the handover, for the ProSe communication to be performed in the target cell 32T after the handover, and hence to prevent a delay in the handover which would otherwise be caused when the preparation of the ProSe communication in the target cell 32T is performed during the execution of the handover procedure.

### Third Embodiment

This embodiment provides a specific example of the processes that are performed in relation to a handover of the UEs 1 and 2 from the source cell 32S to the target cell 32T explained in the first embodiment. Specifically, an example in which the ProSe function entity 9 transmits to at least one of the UEs 1 and 2, in response to a request from the UE 1 or the UE 2, control information about the handover is explained. A configuration example of a radio communication system according to this embodiment is similar to that shown in Figs. 1 and 2.

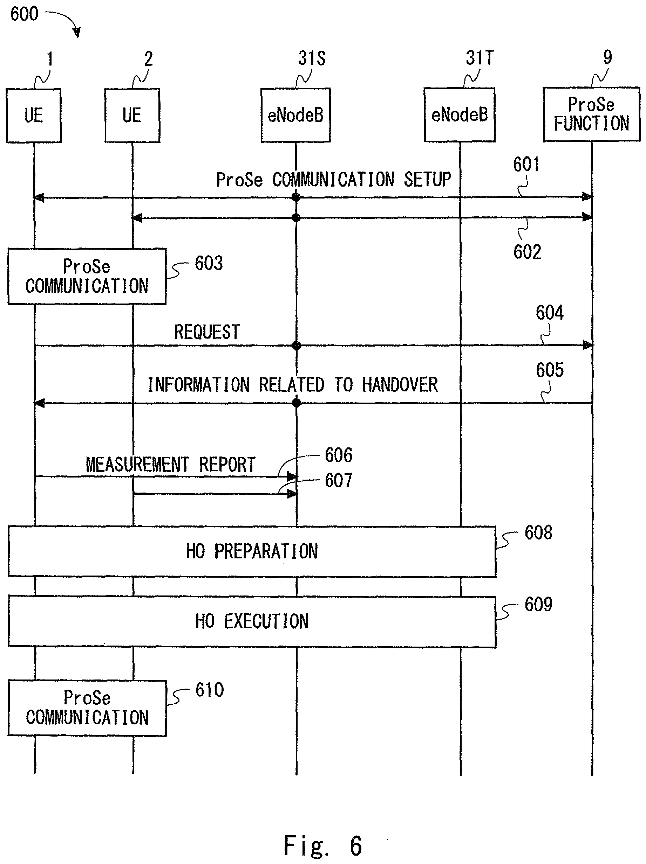

Fig. 6 is a sequence diagram showing processes 600 according to this embodiment. Processes in Blocks 601 to 603 are similar to those in Blocks 501 to 503 in Fig. 5. In Block 604, the UE 1 transmits a transmission request for the control information about the handover to the ProSe function entity 9 through the source eNodeB 31S (source cell 32S) and the EPC 4. The UE 1 may transmit this request in response to detecting a change in the state of the ProSe communication in the source cell 32S. The ProSe function entity 9 transmits the control information about the handover to the UE 1 in response to this request from the UE 1. The ProSe function entity 9 may also transmit the control information to the UE 2 in response to the request from the UE 1. Processes in Blocks 607 to 609 are similar to those in Blocks 506 to 517 in Fig. 5.

In this embodiment, it is possible to prepare, before the handover, for the ProSe communication to be performed after the handover in the target cell 32T, and hence to prevent a delay in the handover which would otherwise be caused when the preparation of the ProSe communication in the target cell 32T is performed during the execution of the handover procedure.

### Fourth Embodiment

This embodiment provides a specific example of the processes that are performed in relation to a handover of the UEs 1 and 2 from the source cell 32S to the target cell 32T explained in the first embodiment. Specifically, an example in which at least one of the UEs 1 and 2 transmits to the ProSe function entity 9, before initiation of the handover, control information about the handover is explained. A configuration example of a radio communication system according to this embodiment is similar to that shown in Figs. 1 and 2.

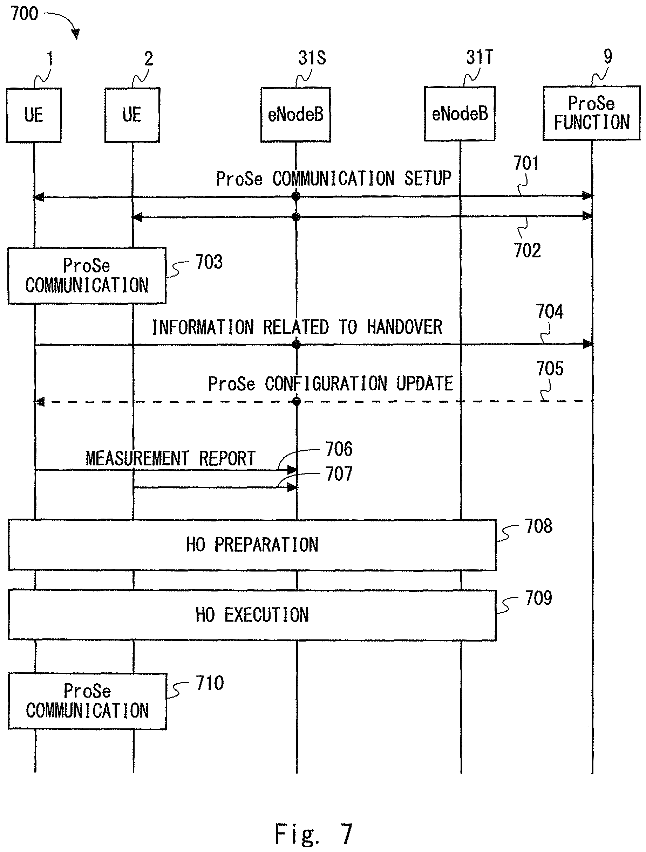

Fig. 7 is a sequence diagram showing processes 700 according to this embodiment. Processes in Blocks 701 to 703 are similar to those in Blocks 501 to 503 in Fig. 5. In Block 704, the UE 1 transmits, before the handover, the control information about the handover to the ProSe function entity 9. This control information may include, for example, at least one of an indication indicating an advance notice of the handover, an indication indicating the target cell 32T or the target eNodeB 31T, an indication indicating the state of the ProSe communication in the source cell 32S, and configuration information for the ProSe communication in the target cell 32T.

In Block 705, upon receiving the control information about the handover from the UE 1, the ProSe function entity 9 may transmit a configuration update massage for the ProSe communication to the UE 1 or to both of the UEs 1 and 2. The configuration update massage for the ProSe communication indicates preservation, modification (e.g., a change in a radio resource), or deletion (i.e., a stop of the ProSe communication) of the configuration for the ProSe communication between the UEs 1 and 2. The process in Block 705 may be omitted. Processes in Blocks 706 to 710 are similar to those in Blocks 506 to 517 in Fig. 5.

In this embodiment, it is possible to prepare, before the handover, for the ProSe communication to be performed in the target cell 32T after the handover , and hence to prevent a delay in the handover which would otherwise be caused when the preparation of the ProSe communication in the target cell 32T is performed during the execution of the handover procedure.

### Fifth Embodiment

This embodiment provides a specific example of the processes that are performed in relation to a handover of the UEs 1 and 2 from the source cell 32S to the target cell 32T explained in the first embodiment. Specifically, an example in which at least one of the UEs 1 and 2 transmits control information about the handover to the ProSe function entity 9 after initiation of the handover but before completion of the handover is explained. A configuration example of a radio communication system according to this embodiment is similar to that shown in Figs. 1 and 2.

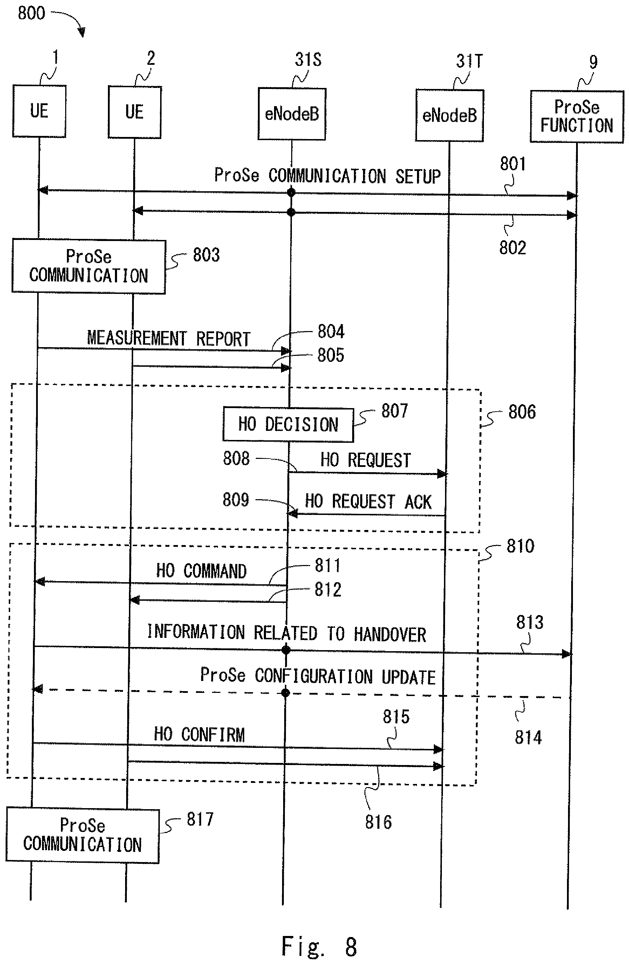

Fig. 8 is a sequence diagram showing processes 800 according to this embodiment. Processes in Blocks 801 to 812 are similar to those in Blocks 501 to 503 and 506 to 514 in Fig. 5. In Block 813, in response to receiving a handover command message (Handover Command) from the source eNodeB 31S, the UE 1 transmits the control information about the handover to the ProSe function entity 9 through the source cell 32S and the EPC 4. This control information may include, for example, at least one of an indication indicating an initiation or execution of the handover, an indication indicating the target cell 32T or the target eNodeB 31T, and configuration information for the ProSe communication in the target cell 32T.

In Block 814, upon receiving the control information about the handover from the UE 1, the ProSe function entity 9 may transmit a configuration update massage for the ProSe communication to the UE 1 or to both of the UEs 1 and 2. The configuration update massage for the ProSe communication indicates preservation, modification (e.g., a change in a radio resource), or deletion (i.e., a stop of the ProSe communication) of the configuration for the ProSe communication between the UEs 1 and 2. The process in Block 814 may be omitted. Processes in Blocks 815 to 817 are similar to those in Blocks 515 to 517 in Fig. 5.

Although Fig. 8 shows an X2 handover based on direct X2 signaling between the eNodeB 31S and the eNodeB 31T, the handover of the UEs 1 and 2 may be an S1 handover based on S1-MME signaling between the EPC 4 (MME 43) and both of the eNodeBs 31S and 31T.

In this embodiment, the ProSe function entity 9 can manage changes in the state (or the configuration) of the ProSe communication caused by the handover, and it is hence possible to prevent an occurrence of a mismatch between the configuration information regarding the ProSe communication held by the ProSe function entity 9 and the configuration regarding the ProSe communication in the UEs 1 and 2.

Note that the UE 1 may transmit the control information about the handover after the transmission of the measurement report (block 804) and before the reception of the handover command message (block 811). However, transmitting by the UE 1 of the control information in response to reception of the handover command message as shown in Fig. 8 has the following advantage: the UE 1 can inform the ProSe function entity 9 of information about the target cell 32T that has been sent to the UE 1 by the handover command message (e.g., indication of the target eNodeB 31T, indication of the target cell 32T, information regarding permission for the ProSe communication in the target cell, and configuration for the ProSe communication in the target cell 32T).

### Sixth Embodiment

This embodiment provides a specific example of the processes that are performed in relation to a handover of the UEs 1 and 2 from the source cell 32S to the target cell 32T explained in the first embodiment. Specifically, an example in which at least one of the UEs 1 and 2 transmits control information about the handover to the ProSe function entity 9 after completion of the handover is explained. A configuration example of a radio communication system according to this embodiment is similar to that shown in Figs. 1 and 2.

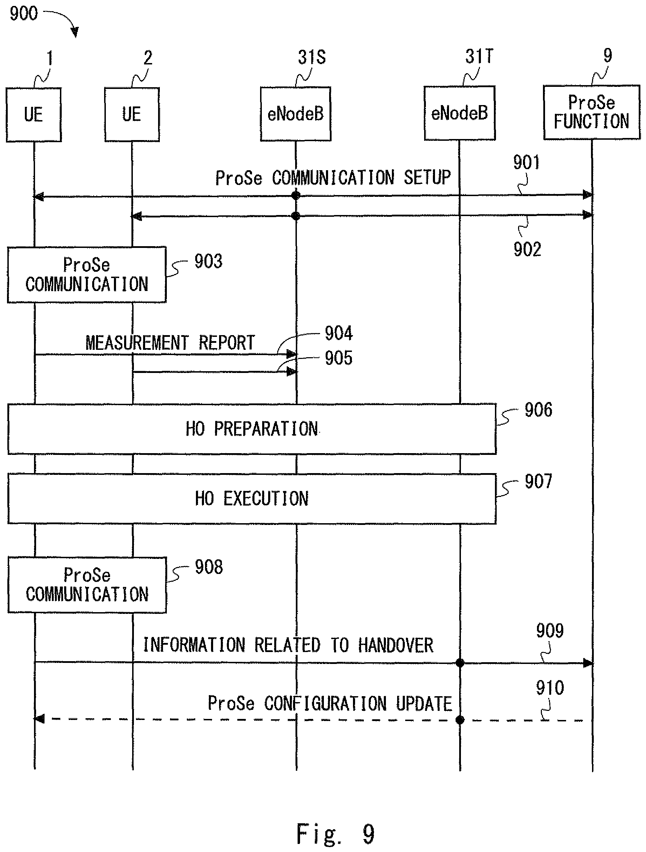

Fig. 9 is a sequence diagram showing processes 900 according to this embodiment. Processes in Blocks 901 to 908 are similar to those in Blocks 501 to 503 and 506 to 517 in Fig. 5. In Block 909, after completion of the handover from the source cell 32S to the target cell 32T, the UE 1 transmits the control information about the handover to the ProSe function entity 9 through the source cell 32S and the EPC 4. This control information may include, for example, at least one of an indication indicating the completion of the handover, an indication indicating the target cell 32T or the target eNodeB 31T, and configuration information for the ProSe communication in the target cell 32T.

In Block 910, upon receiving the control information about the handover from the UE 1, the ProSe function entity 9 may transmit a configuration update massage for the ProSe communication to the UE 1 or to both of the UEs 1 and 2. The configuration update massage for the ProSe communication indicates preservation, modification (e.g., a change in a radio resource), or deletion (i.e., a stop of the ProSe communication) of the configuration for the ProSe communication between the UEs 1 and 2. The process in Block 910 may be omitted.

In this embodiment, the ProSe function entity 9 can manage changes in the state (or the configuration) of the ProSe communication caused by the handover, and it is hence possible to prevent an occurrence of a mismatch between the configuration information regarding the ProSe communication held by the ProSe function entity 9 and the configuration regarding the ProSe communication in the UEs 1 and 2.

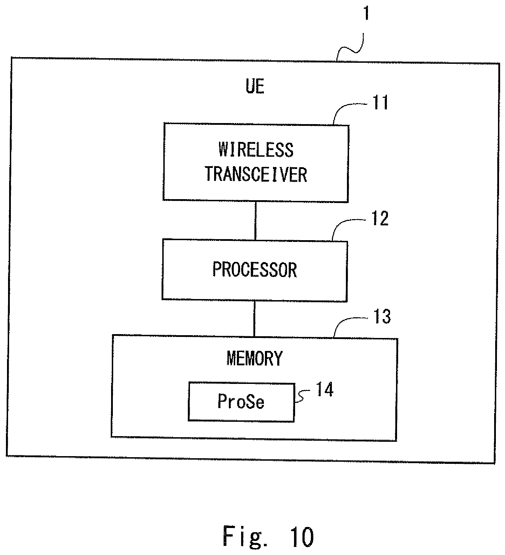

Lastly, configuration examples of the UEs 1 and 2 and the ProSe function entity 9 according to the above-described embodiments are explained. Fig. 10 shows a configuration example of the UE 1. The UE 2 may have a configuration similar to that of the UE 1. Referring to Fig. 10, the UE 1 includes a wireless transceiver (or radio transceiver) 11, a processor 12, and a memory 13. The wireless transceiver 11 is used for communication (101 in Figs. 1 and 2) with the E-UTRAN 3 (eNodeBs 31S and 31S) and also for the ProSe communication (103 in Figs. 1 and 2). The wireless transceiver 11 may include a plurality of transceivers, for example, an E-UTRA (Long Term Evolution (LTE)) transceiver and a WLAN transceiver.

The processor 12 loads software (computer program) from the memory 13 and executes these loaded software, and thereby performs processes of the UE 1 related to the processes 300, 500, 600, 700, 800 or 900 explained in the above-described embodiments. The processor 12 may be, for example, a microprocessor, a Micro Processing Unit (MPU), or a Central Processing Unit (CPU). The processor 12 may include a plurality of processors.

The memory 13consists of a combination of a volatile memory and a nonvolatile memory. The volatile memory is, for example, a Static Random Access Memory (SRAM), a Dynamic RAM (DRAM), or a combination of them. The nonvolatile memory is, for example, a Mask Read Only Memory (MROM), a Programmable ROM (PROM), a flash memory, a hard disk drive, or any combination of them. The memory 13 may include a storage that is remotely arranged from the processor 12. In this case, the processor 12 may access the memory 13 through an I/O interface (not shown).

In the example shown in Fig. 10, the memory 13 is used to store software modules including a ProSe module 14. The ProSe module 14 includes instructions and data necessary for performing processes of the UE 1 related to the processes 300, 500, 600, 700, 800 or 900 explained in the above-described embodiments. The processor 12 loads software modules including the ProSe module 14 from the memory 13 and executes these loaded modules, and thereby performing the processes of the UE 1 explained in the above-described embodiments.

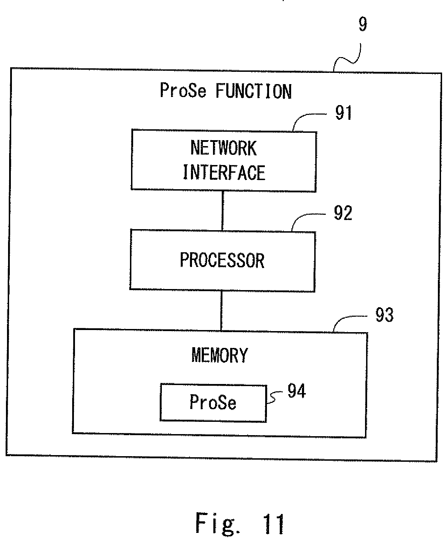

Fig. 11 shows a configuration example of the ProSe function entity 9. Referring to Fig. 11, the ProSe function entity 9 includes a network interface 91, a processor 92, and a memory 93. The network interface 91 is used to communicate with a network node (e.g., P-GW 42 and HSS 44). The network interface 91 may include, for example, a Network Interface Card (NIC) conforming to the IEEE 802.3 series.

The processor 92 loads software (computer program) from the memory 93 and executes these loaded software, and thereby performs processes of the ProSe function entity 9 related to the processes 400, 500, 600, 700, 800 or 900 explained in the above-described embodiments. The processor 92 may be, for example, a microprocessor, an MPU, or a CPU. The processor 92 may include a plurality of processors.

The memory 93 consists of a combination of a volatile memory and a nonvolatile memory. The volatile memory is, for example, an SRAM, a DRAM, or a combination of them. The nonvolatile memory is, for example, an MROM, a PROM, a flash memory, a hard disk drive, or any combination of them. The memory 93 may include a storage that is located physically apart from the processor 92. In this case, the processor 92 may access the memory 93 through the network interface 91 or other I/O interfaces (not shown).

In the example shown in Fig. 11, the memory 93 is used to store software modules including a ProSe module 94. The ProSe module 94 includes instructions and data necessary for performing processes of the ProSe function entity 9 related to the processes 400, 500, 600, 700, 800 or 900 explained in the above-described embodiments. The processor 92 loads software modules including the ProSe module 94 from the memory 93 and executes these loaded modules, and thereby performing processes of the ProSe function entity 9 explained in the above-described embodiments.

As explained above with reference to Figs. 10 and 11, each of the processors included in the UEs 1 and 2 and the ProSe function entity 9 according to the above-described embodiments executes one or more programs including instructions to cause a computer to perform an algorithm explained with reference to the drawings. These programs may be stored in various types of non-transitory computer readable media and thereby supplied to computers. The non-transitory computer readable media includes various types of tangible storage media. Examples of the non-transitory computer readable media include a magnetic recording medium (such as a flexible disk, a magnetic tape, and a hard disk drive), a magneto-optic recording medium (such as a magneto-optic disk), a Compact Disc Read Only Memory (CD-ROM), CD-R, CD-R/W, and a semiconductor memory (such as a mask ROM, a Programmable ROM (PROM), an Erasable PROM (EPROM), a flash ROM, and a Random Access Memory (RAM)). These programs may be supplied to computers by using various types of transitory computer readable media. Examples of the transitory computer readable media include an electrical signal, an optical signal, and an electromagnetic wave. The transitory computer readable media can be used to supply programs to a computer through a wire communication path such as an electrical wire and an optical fiber, or wireless communication path.

### Other Embodiments

Each of the above-described embodiments may be used individually, or two or more of the embodiments may be appropriately combined with one another.

The above-described embodiments are explained by using specific examples mainly related to the EPS. However, these embodiments may be applied to other mobile communication systems such as a Universal Mobile Telecommunications System (UMTS), a 3GPP2 CDMA2000 system (1xRTT, High Rate Packet Data (HRPD)), a Global System for Mobile communications (GSM)/ General packet radio service (GPRS) system, and a mobile WiMAX system.

Further, the above-described illustrative embodiments are merely examples of applications of the technical ideas obtained by the inventor. Needless to say, these technical ideas are not limited to the above-described embodiments and various modifications can be made thereto within the scope of the claims.

### Reference Signs List

- 1: UE
- 2: UE
- 3: E-UTRAN
- 4: EPC
- 9: ProSe FUNCTION ENTITY
- 31S: SOURCE eNodeB
- 31T: TARGET eNodeB
- 32S: SOURCE CELL
- 32T: TARGET CELL
- 103: ProSe COMMUNICATION PATH

## Claims

1. A first radio terminal (1) comprising:
a memory (13); and
a processor (12) coupled to the memory (13), wherein
the processor (12) is adapted to:
communicate with a controlling entity (9) through a first cell (32S) managed by a first radio access network entity (31S) located in a radio access network (3) and through a core network (4) connected to the radio access network (3), in order to establish Proximity Service, ProSe, direct communication (103) with a second radio terminal (2), the ProSe direct communication (103) being performed without communicating through the radio access network (3), the controlling entity (9) being located in the core network (4); and
start the ProSe direct communication (103) with the second radio terminal (2) in the first cell (32S) without communicating through the radio access network (3); **characterized in that** the processor is further adapted to
transmit, to the controlling entity (9) located in the core network (4), first control information about a handover of the first and second radio terminals (1, 2) from the first cell (32S) to a second cell (32T) managed by a second radio access network entity (31T) located in the radio access network (3).

2. The first radio terminal (1) according to Claim 1, wherein the processor (12) is adapted to transmit the first control information to the controlling entity (9) before initiation of the handover.

3. The first radio terminal (1) according to Claim 1, wherein the processor (12) is adapted to transmit the first control information to the controlling entity (9) after initiation of the handover but before completion of the handover.

4. The first radio terminal (1) according to Claim 1, wherein the processor (12) is adapted to transmit the first control information to the controlling entity (9) in response to detecting a change in a state of the ProSe direct communication (103) in the first cell (32S).

5. The first radio terminal (1) according to Claim 4, wherein the change in the state of the ProSe direct communication (103) relates to a distance between the first and second radio terminals (1, 2) or to communication quality of the ProSe direct communication (103) in the first radio terminal (1).

6. The first radio terminal (1) according to Claim 1, wherein the processor (12) is adapted to transmit the first control information to the controlling entity (9) after completion of the handover.

7. The first radio terminal (1) according to any one of Claims 2 to 6, wherein the first control information includes: an indication indicating an advance notice of the handover; an indication indicating an initiation of the handover; an indication indicating completion of the handover; or an indication indicating the second cell (32T).

8. The first radio terminal (1) according to any one of Claims 2 to 7, wherein the processor (12) is further adapted to receive second control information indicating a change in configuration for the ProSe direct communication (103), the second control information being transmitted from the controlling entity (9) in response to the first control information.

9. The first radio terminal (1) according to Claim 8, wherein the second control information indicates preservation, modification, or deletion of the configuration for the ProSe direct communication (103).

10. A controlling entity (9) located in a core network (4), the controlling entity (9) comprising:
a memory (93); and
a processor (92) coupled to the memory (93), wherein
the processor (92) is adapted to:
communicate with a first radio terminal (1) through a first cell (32S) managed by a first radio access network entity (31S) located in a radio access network (3) and through the core network (4) connected to the radio access network (3), in order to establish Proximity Service, ProSe, direct communication (103) between the first radio terminal (1) and a second radio terminal (2), the ProSe direct communication (103) being performed without communicating through the radio access network (3); **characterized in that** the processor is further adapted to
receive, from at least one of the first and second radio terminals (1, 2), first control information about a handover of the first and second radio terminals (1, 2) from the first cell (32S) to a second cell (32T) managed by a second radio access network entity (31T) located in the radio access network (3).

11. The controlling entity (9) according to Claim 10, wherein the processor (92) is adapted to receive the first control information from at least one of the first and second radio terminals (1, 2) before initiation of the handover, or after initiation of the handover but before completion of the handover.

12. The controlling entity (9) according to Claim 11, wherein the first control information includes: an indication indicating an advance notice of the handover; an indication indicating an initiation of the handover; an indication indicating completion of the handover; or an indication indicating the second cell (32T).

13. A method performed by a first radio terminal (1), the method comprising:
communicating with a controlling entity (9) through a first cell (32S) managed by a first radio access network entity (31S) located in a radio access network (3) and through a core network (4) connected to the radio access network (3), in order to establish Proximity Service, ProSe, direct communication (103) with a second radio terminal (2), the ProSe direct communication (103) being performed without communicating through the radio access network (3), the controlling entity (9) being located in the core network (4); and
starting the ProSe direct communication (103) with the second radio terminal (2) in the first cell (32S) without communicating through the radio access network (3); **characterized by** transmitting, to the controlling entity (9) located in the core network (4), first control information about a handover of the first and second radio terminals (1, 2) from the first cell (32S) to a second cell (32T) managed by a second radio access network entity (31T) located in the radio access network (3).

14. A method performed by a controlling entity (9) located in a core network (4), the method comprising:
communicating with a first radio terminal (1) through a first cell (32S) managed by a first radio access network entity (31S) located in a radio access network (3) and through the core network (4) connected to the radio access network (3), in order to establish Proximity Service, ProSe, direct communication (103) between the first radio terminal (1) and a second radio terminal (2), the ProSe direct communication (103) being performed without communicating through the radio access network (3); **characterized by** receiving, from at least one of the first and second radio terminals (1, 2), first control information about a handover of the first and second radio terminals (1, 2) from the first cell (32S) to a second cell (32T) managed by a second radio access network entity (31T) located in the radio access network (3).

15. A computer readable medium comprising instructions which, when executed by a computer-programmable device, cause the computer-programmable device to perform the method according to Claim 13 or 14.

## Patentansprüche

1. Erstes Funkendgerät (1) mit:
einem Speicher (13); und
einem mit dem Speicher (13) verbundenen Prozessor (12), wobei
der Prozessor (12) dazu eingerichtet ist:
über eine erste Zelle (32S), die durch eine erste Funkzugangsnetzwerkeinheit (31S) verwaltet wird, die sich in einem Funkzugangsnetzwerk (3) befindet, und über ein Kernnetzwerk (4), das mit dem Funkzugangsnetzwerk (3) verbunden ist, mit einer Steuereinheit (9) zu kommunizieren, um eine Proximity-Service-, ProSe, Direktkommunikation (103) mit einem zweiten Funkendgerät (2) einzurichten, wobei die ProSe-Direktkommunikation (103) ausgeführt wird, ohne über das Funkzugangsnetzwerk (3) zu kommunizieren, wobei die Steuereinheit (9) im Kernnetzwerk (4) angeordnet ist; und
die ProSe-Direktkommunikation (103) mit dem zweiten Funkendgerät (2) in der ersten Zelle (32S) zu starten, ohne über das Funkzugangsnetz (3) zu kommunizieren;
**dadurch gekennzeichnet, dass** der Prozessor ferner dazu eingerichtet ist
an die im Kernnetzwerk (4) angeordnete Steuereinheit (9) erste Steuerinformation über ein Handover des ersten und des zweiten Funkendgeräts (1, 2) von der ersten Zelle (32S) zur zweiten Zelle (32T) zu übertragen, die durch eine im Funkzugangsnetzwerk (3) angeordnete zweite Funkzugangsnetzwerkeinheit (31T) verwaltet wird.

2. Erstes Funkendgerät (1) nach Anspruch 1, wobei der Prozessor (12) dazu eingerichtet ist, die erste Steuerinformation vor dem Einleiten des Handovers an die Steuereinheit (9) zu übertragen.

3. Erstes Funkendgerät (1) nach Anspruch 1, wobei der Prozessor (12) dazu eingerichtet ist, die ersten Steuerinformationen nach dem Einleiten des Handovers, jedoch vor dem Abschluss des Handovers an die Steuereinheit (9) zu übertragen.

4. Erstes Funkendgerät (1) nach Anspruch 1, wobei der Prozessor (12) dazu eingerichtet ist, die erste Steuerinformation in Antwort auf das Erfassen einer Änderung eines Zustands der ProSe-Direktkommunikation (103) in der ersten Zelle (32S) an die Steuereinheit (9) zu übertragen.

5. Erstes Funkendgerät (1) nach Anspruch 4, wobei die Änderung des Zustands der ProSe-Direktkommunikation (103) mit einem Abstand zwischen dem ersten und dem zweiten Funkendgerät (1,2) oder mit der Kommunikationsqualität der ProSe-Direktkommunikation (103) im ersten Funkendgerät (1) in Beziehung steht.

6. Erstes Funkendgerät (1) nach Anspruch 1, wobei der Prozessor (12) dazu eingerichtet ist, die erste Steuerinformation nach Abschluss des Handovers an die Steuereinheit (9) zu übertragen.

7. Erstes Funkendgerät (1) nach einem der Ansprüche 2 bis 6, wobei die erste Steuerinformation aufweist: eine Anzeige, die eine Fortschrittsmeldung des Handovers anzeigt, eine Anzeige, die das Einleiten des Handovers anzeigt, eine Anzeige, die den Abschluss des Handovers anzeigt, oder eine Anzeige, die die zweite Zelle (32T) anzeigt.

8. Erstes Funkendgerät (1) nach einem der Ansprüche 2 bis 7, wobei der Prozessor (12) ferner dazu eingerichtet ist, zweite Steuerinformation zu empfangen, die eine Änderung der Konfiguration für die ProSe-Direktkommunikation (103) anzeigt, wobei die zweite Steuerinformation von der Steuereinheit (9) in Antwort auf die erste Steuerinformation übertragen wird.

9. Erstes Funkendgerät (1) nach Anspruch 8, wobei die zweite Steuerinformation das Beibehalten, Ändern oder Löschen der Konfiguration für die ProSe-Direktkommunikation (103) anzeigt.

10. Steuereinheit (9), die in einem Kernnetzwerk (4) angeordnet ist, wobei die Steuereinheit (9) aufweist:
einen Speicher (93); und
einen mit dem Speicher (93) verbundenen Prozessor (92), wobei der Prozessor (92) dazu eingerichtet ist:
über eine erste Zelle (32S), die durch eine erste Funkzugangsnetzwerkeinheit (31S) verwaltet wird, die sich in einem Funkzugangsnetzwerk (3) befindet, und über ein Kernnetzwerk (4), das mit dem Funkzugangsnetzwerk (3) verbunden ist, mit einem ersten Funkendgerät (1) zu kommunizieren, um eine Proximity-Service-, ProSe, Direktkommunikation (103) zwischen dem ersten Funkendgerät (1) und einem zweiten Funkendgerät (2) einzurichten, wobei die ProSe-Direktkommunikation (103) ausgeführt wird, ohne über das Funkzugangsnetzwerk (3) zu kommunizieren,
**dadurch gekennzeichnet, dass** der Prozessor ferner dazu eingerichtet ist:
von mindestens einem Funkendgerät unter dem ersten und dem zweiten Funkendgerät (1, 2) erste Steuerinformation über ein Handover des ersten und des zweiten Funkendgeräts (1, 2) von der ersten Zelle (32S) zu einer zweiten Zelle (32T) zu empfangen, die durch eine im Funkzugangsnetzwerk (3) angeordnete zweite Funkzugangsnetzwerkeinheit (31T) verwaltet wird.

11. Steuereinheit (9) nach Anspruch 10, wobei der Prozessor (92) dazu eingerichtet ist, die erste Steuerinformation vor dem Einleiten des Handovers oder nach dem Einleiten des Handovers, aber vor Abschluss des Handovers von mindestens einem Funkendgerät unter dem ersten und dem zweiten Funkendgerät (1, 2) zu empfangen.

12. Steuereinheit (9) nach Anspruch 11, wobei die erste Steuerinformation aufweist:
eine Anzeige, die eine Fortschrittsmeldung des Handovers anzeigt, eine Anzeige, die das Einleiten des Handovers anzeigt, eine Anzeige, die den Abschluss des Handovers anzeigt, oder eine Anzeige, die die zweite Zelle (32T) anzeigt.

13. Verfahren, das durch ein erstes Funkendgerät (1) ausgeführt wird, wobei das Verfahren die Schritte aufweist:
Kommunizieren mit einer Steuereinheit (9) über eine erste Zelle (32S), die durch eine in einem Funkzugangsnetzwerk (3) angeordnete erste Funkzugangsnetzwerkeinheit (31S) verwaltet wird, und über ein Kernnetzwerk (4), das mit dem Funkzugangsnetzwerk (3) verbunden ist, um eine Proximity-Service-, ProSe, Direktkommunikation (103) mit einem zweiten Funkendgerät (2) einzurichten, wobei die ProSe-Direktkommunikation (103) ausgeführt wird, ohne über das Funkzugangsnetzwerk (3) zu kommunizieren, wobei die Steuereinheit (9) im Kernnetzwerk (4) angeordnet ist; und
Starten der ProSe-Direktkommunikation (103) mit dem zweiten Funkendgerät (2) in der ersten Zelle (32S), ohne über das Funkzugangsnetz (3) zu kommunizieren;
**gekennzeichnet durch**
Übertragen von erster Steuerinformation über ein Handover des ersten und des zweiten Funkendgeräts (1,2) von der ersten Zelle (32S) zu einer zweiten Zelle (32T), die durch eine im Funkzugangsnetzwerk (3) angeordnete zweite Funkzugangsnetzwerkeinheit (31T) verwaltet wird, an die im Kernnetzwerk (4) angeordnete Steuereinheit (9).

14. Verfahren, das durch eine Steuereinheit (9) ausgeführt wird, die in einem Kernnetzwerk (4) angeordnet ist, wobei das Verfahren die Schritte aufweist:
Kommunizieren mit einem ersten Funkendgerät (1) über eine erste Zelle (32S), die durch eine in einem Funkzugangsnetzwerk (3) angeordnete erste Funkzugangsnetzwerkeinheit (31S) verwaltet wird, und über das mit dem Funkzugangsnetzwerk (3) verbundene Kernnetzwerk (4), um eine Proximity-Service-, ProSe, Direktkommunikation (103) zwischen dem ersten Funkendgerät (1) und einem zweiten Funkendgerät (2) einzurichten, wobei die ProSe-Direktkommunikation (103) ausgeführt wird, ohne über das Funkzugangsnetzwerk (3) zu kommunizieren;
**gekennzeichnet durch**
Empfangen von erster Steuerinformation über ein Handover des ersten und des zweiten Funkendgeräts (1, 2) von der ersten Zelle (32S) zu einer zweiten Zelle (32T), die durch eine im Funkzugangsnetzwerk (3) angeordnete zweite Funkzugangsnetzwerkeinheit (31T) verwaltet wird, von mindestens einem Funkendgerät unter dem ersten und dem zweiten Funkendgerät (1, 2).

15. Computerlesbares Medium mit Anweisungen, die, wenn sie durch ein computerprogrammierbares Gerät ausgeführt werden, das computerprogrammierbare Gerät veranlassen, das Verfahren nach Anspruch 13 oder 14 auszuführen.

## Revendications

1. Premier terminal radio (1) comprenant :
une mémoire (13) ; et
un processeur (12) couplé à la mémoire (13),
le processeur (12) étant agencé pour :
communiquer avec une entité de commande (9) à travers une première cellule (32S) gérée par une première entité de réseau d'accès radio (31S) située dans un réseau d'accès radio (3) et à travers un réseau d'infrastructure (4) connecté au réseau d'accès radio (3), afin d'établir une communication directe (103) de service de proximité, ProSe, avec un deuxième terminal radio (2), la communication directe ProSe (103) étant réalisée sans communiquer à travers le réseau d'accès radio (3), l'entité de commande (9) étant située dans le réseau d'infrastructure (4) ; et
démarrer la communication directe ProSe (103) avec le deuxième terminal radio (2) dans la première cellule (32S) sans communiquer à travers le réseau d'accès radio (3) ;
**caractérisé en ce que** le processeur est en outre agencé pour
émettre, vers l'entité de commande (9) située dans le réseau d'infrastructure (4), des premières informations de contrôle concernant un transfert intercellulaire des premier et deuxième terminaux radio (1, 2) de la première cellule (32S) à une deuxième cellule (32T) gérée par une deuxième entité de réseau d'accès radio (31T) située dans le réseau d'accès radio (3) .

2. Premier terminal radio (1) selon la revendication 1, dans lequel le processeur (12) est agencé pour émettre les premières informations de contrôle vers l'entité de commande (9) avant l'initiation du transfert intercellulaire.

3. Premier terminal radio (1) selon la revendication 1, dans lequel le processeur (12) est agencé pour émettre les premières informations de contrôle vers l'entité de commande (9) après l'initiation du transfert intercellulaire mais avant l'achèvement du transfert intercellulaire.

4. Premier terminal radio (1) selon la revendication 1, dans lequel le processeur (12) est agencé pour émettre les premières informations de contrôle vers l'entité de commande (9) en réponse à la détection d'un changement dans l'état de la communication directe ProSe (103) dans la première cellule (32S).

5. Premier terminal radio (1) selon la revendication 4, dans lequel le changement dans l'état de la communication directe ProSe (103) se rapporte à une distance entre les premier et deuxième terminaux radio (1, 2) ou à la qualité de communication de la communication directe ProSe (103) dans le premier terminal radio (1).

6. Premier terminal radio (1) selon la revendication 1, dans lequel le processeur (12) est agencé pour émettre les premières informations de contrôle vers l'entité de commande (9) après l'achèvement du transfert intercellulaire.

7. Premier terminal radio (1) selon l'une quelconque des revendications 2 à 6, dans lequel les premières informations de contrôle incluent : une indication indiquant un préavis du transfert intercellulaire ; une indication indiquant une initiation du transfert intercellulaire ; une indication indiquant l'achèvement du transfert intercellulaire ; ou une indication indiquant la deuxième cellule (32T).

8. Premier terminal radio (1) selon l'une quelconque des revendications 2 à 7, dans lequel le processeur (12) est en outre agencé pour recevoir des deuxièmes informations de contrôle indiquant un changement dans la configuration pour la communication directe ProSe (103), les deuxièmes informations de contrôle étant émises par l'entité de commande (9) en réponse aux premières informations de contrôle.

9. Premier terminal radio (1) selon la revendication 8, dans lequel les deuxièmes informations de contrôle indiquent la préservation, la modification ou la suppression de la configuration pour la communication directe ProSe (103).

10. Entité de commande (9) située dans un réseau d'infrastructure (4), l'entité de commande (9) comprenant :
une mémoire (93) ; et
un processeur (92) couplé à la mémoire (93),
le processeur (92) étant agencé pour :
communiquer avec un premier terminal radio (1) à travers une première cellule (32S) gérée par une première entité de réseau d'accès radio (31S) située dans un réseau d'accès radio (3) et à travers le réseau d'infrastructure (4) connecté au réseau d'accès radio (3), afin d'établir une communication directe (103) de service de proximité, ProSe, entre le premier terminal radio (1) et un deuxième terminal radio (2), la communication directe ProSe (103) étant réalisée sans communiquer à travers le réseau d'accès radio (3) ;
**caractérisé en ce que** le processeur est en outre agencé pour
recevoir, à partir d'au moins l'un des premier et deuxième terminaux radio (1, 2), des premières informations de contrôle concernant un transfert intercellulaire des premier et deuxième terminaux radio (1, 2) de la première cellule (32S) à une deuxième cellule (32T) gérée par une deuxième entité de réseau d'accès radio (31T) située dans le réseau d'accès radio (3) .

11. Entité de commande (9) selon la revendication 10, dans laquelle le processeur (92) est agencé pour recevoir les premières informations de contrôle à partir d'au moins l'un des premier et deuxième terminaux radio (1, 2) avant l'initiation du transfert intercellulaire, ou après l'initiation du transfert intercellulaire mais avant l'achèvement du transfert intercellulaire.

12. Entité de commande (9) selon la revendication 11, dans laquelle les premières informations de contrôle incluent : une indication indiquant un préavis du transfert intercellulaire ; une indication indiquant une initiation du transfert intercellulaire ; une indication indiquant l'achèvement du transfert intercellulaire ; ou une indication indiquant la deuxième cellule (32T).

13. Procédé réalisé par un premier terminal radio (1), le procédé comprenant :
la communication avec une entité de commande (9) à travers une première cellule (32S) gérée par une première entité de réseau d'accès radio (31S) située dans un réseau d'accès radio (3) et à travers un réseau d'infrastructure (4) connecté au réseau d'accès radio (3), afin d'établir une communication directe (103) de service de proximité, ProSe, avec un deuxième terminal radio (2), la communication directe ProSe (103) étant réalisée sans communiquer à travers le réseau d'accès radio (3), l'entité de commande (9) étant située dans le réseau d'infrastructure (4) ; et
le démarrage de la communication directe ProSe (103) avec le deuxième terminal radio (2) dans la première cellule (32S) sans communiquer à travers le réseau d'accès radio (3) ;
**caractérisé par**
l'émission, vers l'entité de commande (9) située dans le réseau d'infrastructure (4), de premières informations de contrôle concernant un transfert intercellulaire des premier et deuxième terminaux radio (1, 2) de la première cellule (32S) à une deuxième cellule (32T) gérée par une deuxième entité de réseau d'accès radio (31T) située dans le réseau d'accès radio (3) .

14. Procédé réalisé par une entité de commande (9) située dans un réseau d'infrastructure (4), le procédé comprenant :
la communication avec un premier terminal radio (1) à travers une première cellule (32S) gérée par une première entité de réseau d'accès radio (31S) située dans un réseau d'accès radio (3) et à travers le réseau d'infrastructure (4) connecté au réseau d'accès radio (3), afin d'établir une communication directe (103) de service de proximité, ProSe, entre le premier terminal radio (1) et un deuxième terminal radio (2), la communication directe ProSe (103) étant réalisée sans communiquer à travers le réseau d'accès radio (3) ;
**caractérisé par**
la réception, à partir d'au moins l'un des premier et deuxième terminaux radio (1, 2), de premières informations de contrôle concernant un transfert intercellulaire des premier et deuxième terminaux radio (1, 2) de la première cellule (32S) à une deuxième cellule (32T) gérée par une deuxième entité de réseau d'accès radio (31T) située dans le réseau d'accès radio (3) .

15. Support lisible par ordinateur comprenant des instructions qui, lorsqu'elles sont exécutées par un dispositif programmable par ordinateur, amènent le dispositif programmable par ordinateur à réaliser le procédé selon la revendication 13 ou 14.
